# EUROPEAN PATENT APPLICATION

(11) **EP 0 723 992 A1**
(43) Date of publication of application: **31.07.1996**
(21) Application number: 96300382.7
(22) Date of filing: 19.01.1996
(51) Int. Cl.: C08K 13/02, C08L 25/02

(54) **Flame retardant high impact polystyrene composition**

(30) Priority: 27.01.1995 US 379237
(71) Applicant: GENERAL ELECTRIC COMPANY, Schenectady, NY 12345 (US)
(72) Inventor: Jalbert, Ronald Louis, Parkersburg, West Virginia 26101 (US); Nakamura, Cathleen Marie, Parkersburg, West Virginia 26101 (US)
(74) Representative: Szary, Anne Catherine

(57) **Abstract**

A flame retardant high impact polystyrene composition is provided comprising (a) a high impact polystyrene, (b) a block copolymer of polystyrene and polybutadiene, (c) a halogenated flame retardant, (d) a metal synergist, and (e) a polytetrafluoroethylene polymer. The compositions exhibit V-O flame retardancy at relatively low halogen flame retardant levels and exhibit relatively low melt flows compared to higher loading levels of halogen flame retardants. The compositions are useful for making molded articles such as business machine housings.

## Description

### BACKGROUND OF THE INVENTION

### Field of the Invention

The present invention relates to high impact polystyrene compositions, and more particularly relates to flame retardant high impact polystyrene compositions.

### Description of the Related Art

Flame retardant high impact polystyrene compositions are known, but have normally required high levels of halogenated flame retardant additives to meet V-O for UL-94 at 60 mils, and consequently melt flow has undesirably risen due to polymeric degradation and impact strength as measured by Izod per ASTM 256 has fallen. Reduction of the amount of flame retardant has typically resulted in an undesirable reduction in flame retardancy performance.

Consequently, there is a need to provide flame retardant high impact polystyrene compositions which exhibit sufficient flame retardancy and impact strength with a minimum of increase in melt flow.

### Summary of the Invention

The present invention involves a high impact polystyrene compositions comprising respective amounts of (a) high impact polystyrene resin, (b) block copolymer of styrene and butadiene, (c) a halogenated flame retardant, (d) a metal synergist, and (e) a polytetrafluoroethylene polymer as a drip suppressant. The halogenated flame retardant is preferably an epoxy functional brominated material.

### Detailed Description of the Invention

The thermoplastic composition comprises (a) a high impact polystyrene (rubber modified polystyrene) preferably present at a level of from 55 to 95 percent by weight based on the total weight of the composition, more preferably from 60 to 90 percent by weight thereof, and most preferably from 70 to 80 percent by weight thereof; (b) a block copolymer selected from A-B and A-B-A' block copolymers wherein A and A' are polystyrene blocks and B is a polybutadiene block, wherein the block copolymer is preferably present at a level of from 1 to 30 percent by weight based on the total weight of the composition, more preferably from 2 to 20 percent by weight thereof, and most preferably from 3 to 10 percent by weight thereof; (c) a halogenated flame retardant preferably present at a level of from 5 to 30 percent by weight based on the total weight of the composition, more preferably from 10 to 20 percent by weight thereof, and most preferably 15 percent by weight thereof; (d) a metal synergist preferably present at a level of from 1 to 15 percent by weight based on the total weight of the composition, more preferably from 2 to 10 percent by weight thereof, and most preferably from 3 to 5 percent by weight thereof; and (e) a tetrafluoroethylene polymer preferably present at a level of from 0.03 to 1.0 percent by weight based on the total weight of the composition, more preferably from 0.04 to 0.5 percent by weight thereof, and most preferably from 0.05 to 0.1 percent by weight thereof.

The polymer mixture according to the invention comprises a rubber-modified polystyrene of a particular type, namely a rubber-modified polystyrene built up from a polystyrene matrix with uniformly distributed therein rubber-like particles of (co)polymerisates built up substantially of 1,3-dienes with a capsule particle morphology, the particles having an average particle size (d₅₀-value of the cumulative mass distribution) of 0.2-20.0 micrometers preferably from 0.2 to 2.0 microns.

Average particle size for the rubber-modified polystyrene is to be understood to mean the average particle diameter of the d₅₀-value of the cumulative mass distribution. The actual determination of the particle size is carried out according to a method known per se by measuring the particles in electron micrograph (see F. Lenz, Zeitschrift fur wissenschaftliche Mikroskopie, 63 (1956), 50-56). The rubber-like copolymerisate must have a so-called capsule particle morphology. In Angew-Makromolekulare Chemie 58/59 (1977), pp. 175-198 the said morphology and the way in which this can be obtained are described.

In the rubber-modified polystyrene, the content of rubber-like particles, corresponding to the content of gel phase or soft component, is preferably 3-30% by weight calculated with respect to the quantity of rubber-modified polystyrene.

The (co)polymerisate present in the rubber-like particles usually consists of polybutadiene or a butadiene-styrene copolymer or block copolymer.

Polystyrene is to be understood to include not only the homopolymers of styrene, but all polymers or copolymers which are built up for more than 50 mol. % from vinylaromatic monomers, for example, styrene and styrene compounds substituted in the nucleus or in the side chain with halogen atoms or lower alkyl groups. The polystyrene may be a copolymer obtained by polymerization of styrene monomer in the presence of one or more further copolymerizable monomers such as acrylonitrile. Such copolymerizable monomers can be present in a quantity of up to 49 mol % for example up to 40 mol %.

The composition, and specifically the high impact polystyrene, preferably consists of vinyl aromatic and diene derived components and is free of components derived from unsaturated nitriles such as acrylonitrile, and acrylates such as methylmethacrylate. Preferably the high impact polystyrene is prepared by bulk polymerization and has a large rubber particle size (diameter). As agents to improve the impact strength may be mentioned, for example, vinylaromatic polybutadiene di- or triblock copolymers.

Monovinylidene aromatic monomers (vinyl aromatic monomers) which may be employed include styrene, alpha-methyl styrene, halostyrenes i.e. dibromostyrene, mono or di alkyl, alkoxy or hydroxy substitute groups on the nuclear ring of the monovinylidene aromatic monomer i.e. vinyl toluene, vinylxylene, butylstyrene, para-hydroxystyrene or methoxystyrene or mixtures thereof. The monovinylidenearomatic monomers utilized are generically described by the following formula: 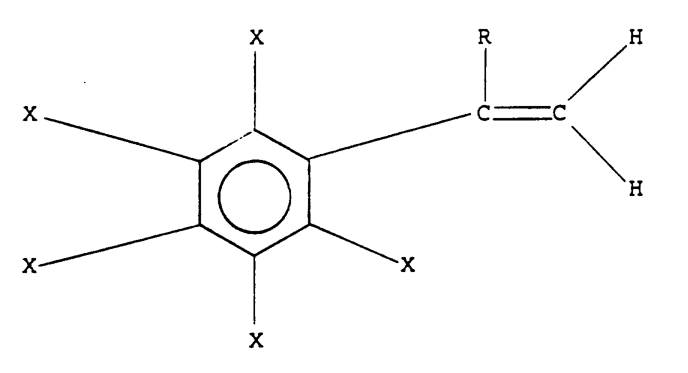 wherein X is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are styrene and/or α-methylstyrene.

The diene rubbers may preferably be polybutadiene, polyisoprene and copolymers of butadiene with up to 35% by weight of comonomers such as styrene which are produced by aqueous radical emulsion polymerisation.

Specific conjugated diene monomers normally utilized in preparing the rubber substrate of the graft polymer are generically described by the following formula: 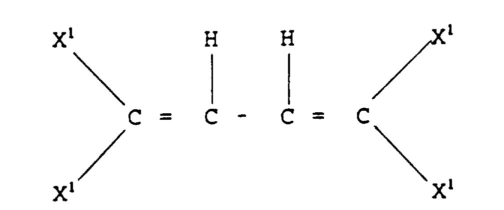 wherein X¹ is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene or a copolymer, such as butadiene-styrene. The rubbery polymeric substrate portion must exhibit a glass transition temperature (Tg) of less than about 0°C.

The usual flameproofing additives, in particular low molecular weight bromine compounds, can be used. Examples are octabromodiphenyl ethers, tetrabromophthalimide, tribromophenoxymethane, bis(tribromophenoxy)ethane, poly or oligomeric tetrabromobisphenol A, tris(tribromophenyl) triphosphate, trichlorotetrabromotoluene, hexabromocyclododecane and decabromodiphenyl ether.

The flame retardant thermoplastic composition may contain various other components such as flame retardant synergists (enhancing agents) such as oxides and halides of groups IV-A and V-A of the periodic table; organic or inorganic compounds of phosphorous, nitrogen, boron or sulfur; and oxides and halides of, for example, zinc, magnesium and titanium, all as disclosed in U.S. Pat. No. 4,016,139. Preferred enhancing agents in accordance with this invention are the oxides of antimony, arsenic and bismuth, with the oxides of antimony being especially preferred. Suitable synergists include Sb₂O₃ (antimony trioxide), Sb₂(CO₃)₃, Bi₂O₃ and Bi₂ (CO₃)₃.

The tetrafluoroethylene polymers suitable according to the invention as component (c) are polymers having fluorine contents of 65 to 76% by weight, preferably 70 to 76% by weight. Examples are polytetrafluoroethylene, tetrafluoroethylene/ hexafluoropropylene, copolymers or tetrafluoroethylene copolymers with small amounts of fluorine-free copolymerisable ethylenically unsaturated monomers. The polymers are known. They can be prepared by known processes, thus, for example, by polymerisation of tetrafluoroethylene in an aqueous medium with a catalyst forming free radicals, for example sodium, potassium or ammonium peroxydisulphate, under pressures of 7 to 71 kg/cm², and at temperatures of 0° to 200° C., preferably at temperatures of 20° to 100° C. (For further details, see, for example, U.S. Pat. No. 2,393,967).

Suitable tetrafluoroethylene polymer emulsions are commercially available products and are marketed by, for example, DuPont as Teflon® 30N. In the present application, particle size always means the mean particle diameter d₅₀, determined by measurements in an ultracentrifuge by the method of W. Scholtan et al., Kolloid-Z, u.Z Polymere 250, (1972) 782-796.

The composition are useful for making thermoplastic molded articles such as business machine housings.

Preferably the compositions are made by first preparing a masterbatch by blending granulated polystyrene, powdered polytetrafluoroethylene (PTFE), a flame retardant and an antimony synergist, and then blending the masterbatch with high impact polystyrene pellets. The PTFE may be in powdered form or in latex form.

### Examples

The present examples illustrate the present invention.

**Table 1**

| | A | B | 1 |
|---|---|---|---|
| HIPS-1 | 100 | 100 | 100 |
| HIPS-2 | | | |
| TBBPA | -- | -- | -- |
| FR-BR | -- | 15 | 15 |
| Antimony Oxide | -- | 5 | 5 |
| SB-1 | -- | 5 | 5 |
| PTFE | -- | 0.0 | 0.1 |
| Mg stearate | -- | -- | -- |
| Izod | 3.6 | 1.6 | 1.7 |
| UL94 @60 mils | HB | dripped | V-O |
| Melt flow | | | |
| 5 kgs load @200°C | 9.0 | 11.2 | 10.0 |

HIPS-1 is a high impact polystyrene PS3080.
HIPS-2 is a high impact polystyrene Chevron MC6800.
SB-1 is a styrene butadiene block copolymer Steron 840A.
FR-BR is a brominated flame retardant (DE-83R) is Decabromodiphenyloxide.

Note the relatively consistent melt flows between comparative examples A, B and example 1, and also note the relatively low level of flame retardant (15 pbw, 12 weight percent), and note the V-O rating of example 1 compared to comparative examples A and B.

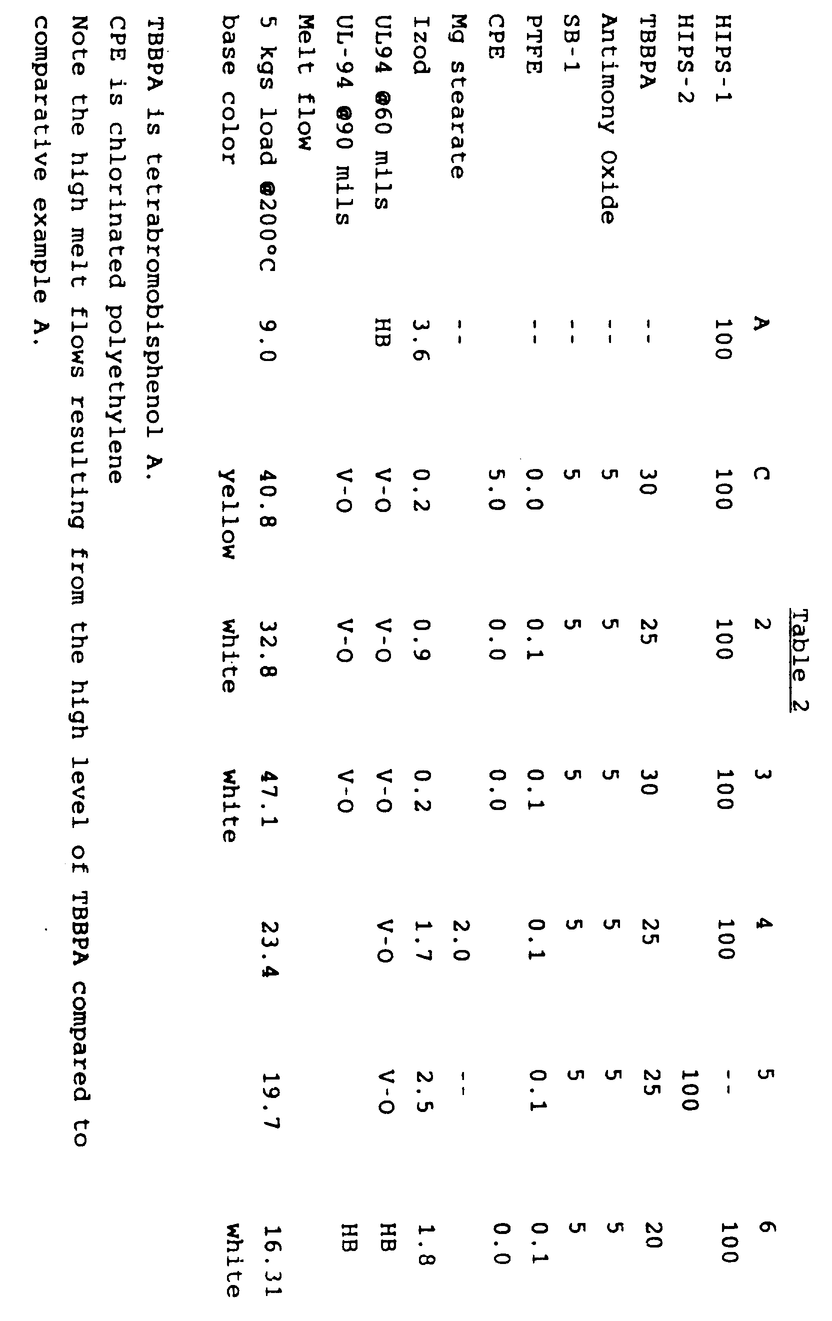

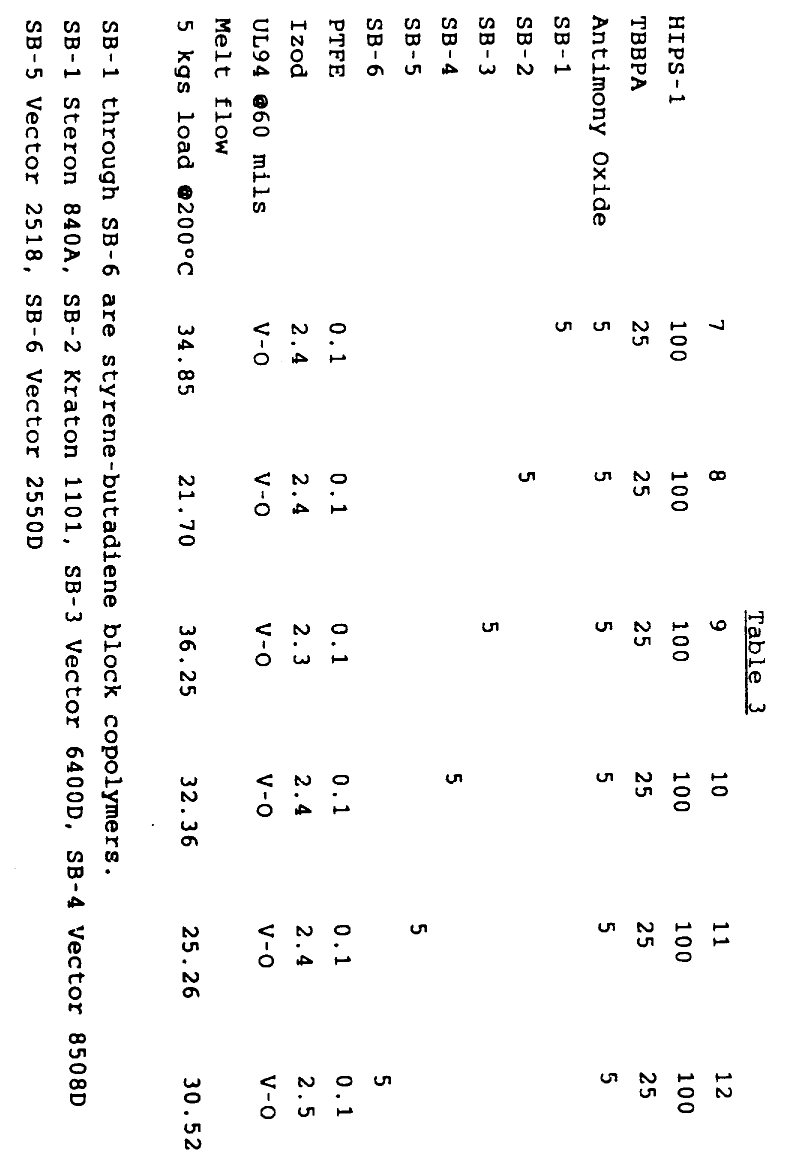

Note the V-O ratings of examples 7-12.

Note the surprising and unexpectedly superior results of example 1 over the other examples as evidenced by the low melt flow value and V-O rating at a flame retardant loading level of only 15 parts by weight.

## Claims

1. A flame retardant thermoplastic composition comprising
(a) a rubber impact modified polystyrene present at a level of from 55 to 95 percent by weight based on the total weight of said composition, said rubber impact modified polystyrene consisting of diene rubber and a polystyrene matrix consisting of styrene,
(b) a block copolymer selected from the group consisting of A-B and A-B-A' block copolymers wherein A is a polystyrene block, A' is a polystyrene block, B is a diene rubber block, said block copolymer being present at a level of from 1 to 30 percent by weight based on the total weight of the composition,
(c) a halogenated flame retardant present at a level of from 5 to 30 percent by weight based on the total weight of the composition,
(d) a metal synergist present at a level of from 1 to 15 percent by weight based on the total weight of the composition,
(e) a polytetrafluoroethylene polymer present at a level of from 0.03 to 1.0 percent by weight based on the total weight of the composition.

2. The composition of Claim 1 wherein said rubber impact modified polystyrene is present at a level of from 60 to 90 percent by weight based on the total weight of the composition, said block copolymer being present at a level of from 2 to 20 percent by weight based on the total weight of the composition, said halogenated flame retardant being present at a level of from 10 to 20 percent by weight based on the total weight of the composition, said metal synergist being present at a level of from 2 to 10 percent by weight based on the total weight of the composition, said polytetrafluoroethylene being present at a level of from 0.04 to 0.5 percent by weight based on the total weight of the composition.

3. A thermoplastic resin composition consisting essentially of
(a) high impact polystyrene,
(b) a block copolymer comprising a polystyrene block and a 1,3 butadiene block,
(c) a brominated aromatic flame retardant,
(d) an antimony compound,
(e) a polytetrafluoroethylene polymer.

4. The composition of Claim 3 wherein said high impact polystyrene consists of a diene rubber and a polystyrene matrix.

5. The composition of Claim 3 wherein said high impact polystyrene is present at a level of from 70 to 80 percent by weight based on the total weight of the composition, said flame retardant being present at a level of from 10 to 20 percent by weight based on the total weight of the composition.

6. The composition of Claim 3 wherein said composition consists of said (a), (b), (c), (d) and (e).

7. The composition of Claim 3 wherein said antimony compound is antimony oxide.

8. The composition of Claim 3 wherein said brominated aromatic flame retardant is tetrabromobisphenol A

9. A flame retardant thermoplastic resin composition comprising:
(a) a rubber modified polystyrene consisting of a homopolystyrene matrix and a 1,3 butadiene-styrene copolymeric rubber,
(b) a styrene-butadiene-styrene triblock copolymer,
(c) tetrabromobisphenol A present at a level of from 10 to 20 percent by weight based on the total weight of the composition,
(d) antimony oxide present at a level of from 2 to 10 percent by weight based on the total weight of the composition, and
(e) a polytetrafluoroethylene polymer present at a level of from 0.04 to 0.5 percent by weight based on the total weight of the composition.

10. The composition of Claim 1 wherein said rubber modified polystyrene is present at a level of from 60 to 90 percent by weight based on the total weight of the composition, and said triblock copolymer being present at a level of from 2 to 20 percent by weight based on the total weight of the composition.
